# FASCICULE DE BREVET EUROPEEN

(11) **EP 4 326 650 B1**
(45) Date de publication et mention de la délivrance du brevet: **29.01.2025**
(21) Numéro de dépôt: 22722317.9
(22) Date de dépôt: 14.04.2022
(51) Int. Cl.: B65G 29/02, A01K 43/00, B65G 47/84, B65G 47/91, B65G 45/22, B65G 45/26

(54) **APPAREIL DE TRANSFERT D'OBJETS**
VORRICHTUNG ZUM ÜBERFÜHREN VON GEGENSTÄNDEN
APPARATUS FOR TRANSFERRING OBJECTS

(30) Priorité: 19.04.2021 FR 2104050
(43) Date de publication de la demande: 28.02.2024
(73) Titulaire: Egg-Chick Automated Technologies, 29400 Landivisiau (FR)
(72) Inventeur: LÉRAN, Frédéric, 20400 LANDIVISIAU (FR); MALET, Bertrand, 20400 LANDIVISIAU (FR); TALARMIN, Steven, 20400 LANDIVISIAU (FR); ROLLAND, Lionel, 20400 LANDIVISIAU (FR)
(74) Mandataire: Plasseraud IP
(86) Numéro de dépôt international: PCT/FR2022/050711
(87) Numéro de publication internationale: WO 2022/223913

(56) Documents cités:
- WO-A1-2016/042394
- WO-A1-2020/094958
- US-A- 5 881 860

## Description

### Domaine technique

La présente invention concerne un appareil pour transférer des objets en défilement sur un convoyeur.

Elle concerne également une installation de traitement d'œufs placés dans des contenants en déplacement sur une ligne de traitement à hautes cadences.

### Technique antérieure

Il est connu dans le domaine de l'aviculture, en particulier dans la production de poussins, d'utiliser les propriétés optiques des œufs pour discriminer ces derniers et ignorer lors du traitement, les œufs identifiés comme étant non susceptibles d'éclore et de donner naissance à un poussin.

Ces derniers dits « non viables », sont essentiellement des œufs infertiles ou des œufs fécondés mais dont l'embryon de l'œuf est mort ou encore malformé.

Cette discrimination est rendue nécessaire pour minimiser les pertes de vaccins lors de traitement in ovo, c'est-à-dire lors d'une injection par aiguille de vaccin au travers de la coquille de l'œuf en vue de favoriser son éclosion et de prévenir l'apparition de maladies.

Ainsi, une fois cette étape de discrimination réalisée, par exemple par un procédé de mirage, il est utile de retirer les œufs non viables du circuit de sorte à ne pas les envoyer vers des postes de traitement réservés aux seuls œufs fécondés.

On connaît des dispositifs de transfert d'objets pour saisir parmi un ensemble d'objets en défilement sur un convoyeur, certains d'entre eux tels que des pièces défectueuses, afin de transférer ces derniers vers un convoyeur d'évacuation.

Un tel dispositif de transfert d'objets comprend typiquement un rouleau d'enlèvement tournant sur lui-même, lequel présente sur sa surface externe des outils de préhension espacés les uns des autres et s'étendant radialement pour saisir individuellement et sélectivement des objets à prélever parmi des objets en défilement.

A titre purement illustratif, ces outils de préhension individuelle sont formés d'une tige à l'extrémité de laquelle est placée une ventouse, cette tige étant reçue de manière coulissante dans un orifice du rouleau d'enlèvement de sorte à être mobile entre une position de repos dans laquelle cette ventouse est plaquée contre la surface externe du rouleau et une position de préhension dans laquelle cette ventouse forme saillie dudit rouleau pour saisir un objet en défilement.

Le déplacement de l'outil de préhension entre ces deux positions extrêmes est obtenu par un vérin placé à l'intérieur du rouleau et dont la tige d'actionnement vient en appui contre l'extrémité libre de la tige de l'outil de préhension lorsque ce dernier entraîné par le rouleau tournant est présenté en regard du vérin pneumatique.

Toutefois, lorsqu'un objet est récupéré par un tel outil de préhension individuelle, le rouleau d'enlèvement continuant à tourner, si la tige d'actionnement du vérin ne revient pas assez rapidement vers sa position initiale ou si le vérin est défectueux, on constate que cette dernière est violemment heurtée par la tige d'un outil de préhension subséquent, dans sa position de repos, amenée en regard du vérin par la rotation du rouleau d'enlèvement.

Il s'ensuit une détérioration du vérin nécessitant un arrêt complet du dispositif de transfert d'objets pour sa maintenance, ce qui bien entendu, est préjudiciable à la cadence atteignable par la ligne de traitement.

Il en résulte également des surcoûts qui sont non compatibles avec une exploitation industrielle. En particulier, WO2020/094958 Al divulgue un appareil de transfert -d'objets selon le préambule de la revendication 1.

Il existe donc un besoin pressant pour un dispositif de transfert d'objets en défilement sur un tapis de convoyage, notamment des œufs, dont la conception originale permette de surmonter les inconvénients de l'art antérieur exposés ci-dessus.

### Objet de l'invention

La présente invention vise à pallier les inconvénients de l'art antérieur en proposant un dispositif de transfert d'objets, simple dans sa conception et dans son mode opératoire, offrant une fiabilité accrue, c'est-à-dire permettant d'améliorer sensiblement sa durée de service.

Un autre objet de la présente invention est un tel dispositif de transfert d'objets autorisant des cadences de traitement extrêmement rapides, et à titre illustratif, supérieures à 90 000 œufs à l'heure.

Encore un objet de la présente invention est un tel dispositif de transfert qui soit d'une maintenance particulièrement aisée.

La présente invention vise également une installation de traitement d'œufs permettant de prélever sélectivement des œufs dans des contenants en déplacement sur un convoyeur à grande vitesse, par exemple, parce que ces œufs sont non conformes (viabilité de l'œuf, taille de l'œuf, ...).

### Exposé de l'invention

A cet effet, l'invention concerne un appareil pour transférer des objets comprenant :
- un rouleau d'enlèvement d'objets comprenant sur sa périphérie des éléments de saisie individuelle desdits objets,
- un dispositif pour entrainer en rotation ledit rouleau d'enlèvement d'objets,
- lesdits éléments de saisie individuelle étant disposés en au moins une couronne, ledit appareil comportant pour chaque couronne, un actionneur linéaire, placé dans le volume intérieur délimité par ledit rouleau, pour déplacer un élément de saisie individuelle de la couronne correspondante, se présentant face à cet actionneur linéaire entre une position de repos et une position de préhension dans laquelle cet élément de saisie individuelle s'étend radialement en faisant saillie de ce rouleau d'enlèvement pour saisir un objet, la position de préhension étant obtenue par appui d'une extrémité libre mobile dudit actionneur linéaire sur ledit élément de saisie individuelle, ledit rouleau d'enlèvement étant configuré pour faire défiler un à un, devant chaque actionneur linéaire, lors de sa rotation, un élément de saisie individuelle dans sa position de repos, et dans lequel
- l'extrémité libre dudit actionneur linéaire étant mobile entre une position repliée et une position déployée dans laquelle cette extrémité libre est en contact avec un élément de saisie individuelle. Selon l'invention, cet actionneur linéaire est mobile en rotation entre au moins une position d'engagement et une position de dégagement de sorte que l'extrémité libre dudit actionneur linéaire étant dans sa position déployée ou dans une position intermédiaire entre sa position déployée et sa position repliée, ledit actionneur linéaire est librement déplacé de sa position d'engagement à sa position de dégagement lorsqu'il entre en contact avec un autre élément de saisie individuelle, dans sa position de repos, amené par ledit rouleau d'enlèvement en rotation,
- ladite position de dégagement correspondant à une position dans laquelle ledit actionneur est espacé desdits éléments de saisie individuelle, ledit ensemble comprenant un élément de rappel pour ramener ledit actionneur de sa position de dégagement à sa position d'engagement lorsque l'extrémité libre dudit actionneur est dans sa position repliée ou dans une position intermédiaire non susceptible d'interagir avec un élément de saisie individuelle dans sa position de repos.

De manière avantageuse, la conception originale de cet appareil de transfert assure un basculement libre de l'actionneur linéaire dans sa position de dégagement lorsque sa tige d'actionnement entre en contact avec un élément de saisie individuelle dans sa position de repos. Ainsi, lorsque la tige d'actionnement de l'actionneur linéaire ne revient pas assez rapidement dans sa position repliée, il n'existe aucun risque d'endommagement de cet actionneur. Ce dernier dispose alors du temps nécessaire pour que sa tige d'actionnement revienne dans sa position repliée ou dans une position intermédiaire non susceptible d'interagir avec les éléments de saisie individuelle dans leur position de repos.

Cet appareil de transfert d'objets trouve des applications dans de nombreux domaines techniques, par exemple dans le tri de pièces en défilement sur des convoyeurs.

A titre purement illustratif, cet appareil de transfert d'objets peut être mis en œuvre pour retirer des pièces défectueuses d'une chaîne de production, ces pièces ayant préalablement été identifiées au moyen d'un système de reconnaissance optique.

Il peut encore être utilisé pour le tri d'objets fragiles dans le domaine de l'agro-alimentaire tels que des œufs traités à des cadences élevées. Dans ce dernier domaine, on constate non seulement que l'appareil de transfert de l'invention présente une fiabilité accrue mais autorise également des cadences extrêmement rapides, typiquement supérieures à 90 000 œufs à l'heure.

Selon un mode de réalisation de cet appareil pour transférer des objets, ledit élément de rappel pour ramener ledit actionneur linéaire de sa position de dégagement à sa position d'engagement est un élément ressort ou un dispositif d'attraction magnétique tel qu'un électro-aimant.

De manière avantageuse, cet élément ressort est un ressort de torsion.

Selon un autre mode de réalisation de cet appareil pour transférer des objets, il comprend, pour chaque actionneur linéaire, un moyen pour détecter la position de son extrémité libre, ce moyen de détection étant relié audit élément de rappel correspondant pour commander son déclenchement.

De manière avantageuse, il s'agit d'un capteur de position qui permet de détecter la position de la tige d'actionnement de l'actionneur linéaire. Lorsque cette tige d'actionnement est dans une position garantissant la sécurité de l'actionneur linéaire dans sa position d'engagement, au regard d'un élément de saisie individuelle dans sa position de repos, un signal de commande peut être adressé audit élément de rappel correspondant pour déclencher ce dernier et déplacer ainsi cet actionneur linéaire de sa position de dégagement vers sa position d'engagement.

Selon encore un autre mode de réalisation de cet appareil pour transférer des objets, ledit actionneur linéaire est monté fixe sur un support mobile en rotation, ce support étant configuré pour déplacer ledit actionneur linéaire entre ladite position d'engagement et ladite position de dégagement lors de sa rotation.

Selon encore un autre mode de réalisation de cet appareil pour transférer des objets, chacun de ces éléments de saisie individuelle comporte un piston pourvu à son extrémité libre d'une ventouse.

De préférence, le piston de chaque élément de saisie individuelle est creux et débouche sur un orifice de la ventouse pour créer une tête d'aspiration.

Selon encore un autre mode de réalisation de cet appareil pour transférer des objets, le piston de chaque élément de saisie individuelle étant reçu dans un orifice dudit rouleau d'enlèvement, ledit appareil comprend une unité de pompage pour mettre en dépression une partie du volume intérieur dudit rouleau et plaquer les ventouses des éléments de saisie individuelle contre la surface externe dudit rouleau lorsque ces éléments de saisie individuelle sont déplacés en rotation par ledit rouleau sur un segment de trajet circulaire correspondant à ladite partie de volume intérieur ainsi mise en dépression.

A titre d'exemple, cet appareil comprend une chambre à vide en communication avec chacun desdits orifices de la partie du rouleau d'enlèvement décrivant ce segment de trajet circulaire.

De préférence, chaque piston est reçu dans son orifice de sorte qu'il peut coulisser librement dans ce dernier.

Selon encore un autre mode de réalisation de cet appareil pour transférer des objets, ledit ensemble d'entrainement en rotation de ce rouleau d'enlèvement d'objets est configuré de sorte que la vitesse de rotation du rouleau d'enlèvement d'objets est supérieure ou égale à 20 tours/min et encore mieux à 30 tours/min.

Selon encore un autre mode de réalisation de cet appareil pour transférer des objets, ledit actionneur linéaire est un actionneur électromécanique, un actionneur pneumatique ou encore un actionneur hydraulique.

Selon encore un autre mode de réalisation de cet appareil pour transférer des objets, il comporte des moyens pour interrompre le vide sur un autre segment de trajet circulaire des éléments de saisie individuelle afin de libérer les objets ainsi saisis en au moins un point de dépôt prédéterminé.

Ce point de dépôt prédéterminé correspond avantageusement à la surface d'un tapis d'un autre convoyeur afin d'évacuer les objets ainsi transférés.

Selon encore un autre mode de réalisation de cet appareil pour transférer des objets, il comporte une unité de commande pour commander de manière individuelle chaque actionneur linéaire afin de saisir sélectivement un ou plusieurs œufs passant simultanément au droit d'éléments de saisie individuelles dudit rouleau d'enlèvement.

Chaque actionneur linéaire est ainsi pilotable de manière à enlever des objets d'intérêt.

Selon encore un autre mode de réalisation de cet appareil pour transférer des objets, il est configuré pour activer chaque actionneur linéaire uniquement lorsque ce ou ces derniers sont dans leur position d'engagement. Autrement dit, lorsqu'un actionneur linéaire est dans sa position de dégagement, sa tige d'actionnement ne peut que revenir dans sa position repliée et non être déplacée dans sa position déployée.

Selon encore un autre mode de réalisation de cet appareil pour transférer des objets, il comporte un dispositif de nettoyage placé à l'intérieur dudit rouleau pour éjecter de l'eau sous pression dans ledit rouleau lorsque ce dispositif de nettoyage est connecté à une source d'alimentation en eau sous pression.

Par exemple, ce dispositif de nettoyage peut être une rampe de lavage pourvue de trous régulièrement espacés.

De préférence, les éléments de saisie individuelle sont préalablement extraits de leur orifice lors du lavage du rouleau afin de permettre le passage de l'eau au travers de ces orifices.

Selon encore un autre mode de réalisation de cet appareil pour transférer des objets, il comprend dans sa partie inférieure un bac de récupération des eaux usées, lequel peut être relié à un circuit d'élimination des eaux usées comportant une pompe d'aspiration.

De préférence, ce circuit d'élimination des eaux usées et cette pompe sont montés sur un châssis mobile de sorte qu'ils peuvent être déplacés librement par l'opérateur. Par exemple, ce circuit d'élimination comporte un tuyau flexible apte à être relié à un orifice de décharge du bac de récupération des eaux usées. Ce châssis peut recevoir également le circuit d'alimentation en eau de lavage destiné à être relié au dispositif de nettoyage pour son alimentation en eau sous pression.

Il est encore possible de réinjecter les eaux récupérées dans le bac de récupération pour tourner en circuit fermé pendant une durée déterminée par l'opérateur. Un tel mode de réalisation permet avantageusement des économies d'eau.

La présente invention concerne également une installation de traitement d'œufs comportant un appareil de transfert d'objets tel que décrit précédemment, un premier convoyeur pour faire défiler des œufs au droit dudit appareil de transfert et un second convoyeur pour évacuer les œufs saisis depuis le premier convoyeur par ledit appareil de transfert d'œufs.

Ces œufs peuvent bien entendu être transportés dans des contenants déplacés sur le premier convoyeur et être transférés dans d'autres contenants sur le second convoyeur.

L'appareil de transfert d'objets comporte alors une unité de commande configurée pour calculer la vitesse de rotation du rouleau d'enlèvement de manière à synchroniser le prélèvement d'un ou plusieurs œufs avec le défilement des contenants sur le premier convoyeur.

Cette installation autorise avantageusement des cadences élevées de traitement automatique typiquement supérieures à 90 000 œufs à l'heure, voire supérieures à 110 000 œufs à l'heure.

De préférence, ce premier convoyeur comportant n voies de transport d'œufs avec n supérieur ou égal à 2, le rouleau d'enlèvement comporte des éléments de saisie individuelle répartis en n couronnes, et par conséquent, l'appareil de transfert comprend n actionneurs linéaires.

Ainsi et pour chaque voie de transport, l'appareil de transfert comporte un actionneur linéaire.

De manière avantageuse, ces œufs étant placés dans des contenants, cette installation de traitement d'œufs comprend un dispositif de mirage des œufs comportant au moins une unité de mesure à travers laquelle des œufs de chaque contenant défilent par rangées successives, et une unité de traitement pour traiter des signaux acquis par chaque unité de mesure.

Dans un mode de mise en œuvre, ce dispositif de mirage peut comporter une pluralité de sources lumineuses pour illuminer chacune un œuf d'au moins une rangée d'alvéoles d'un contenant, des détecteurs pour recevoir chacun la lumière passant à travers un œuf ainsi illuminé et une unité de traitement pour traiter le signal lumineux ainsi détecté par les détecteurs. Avantageusement, ces sources lumineuses sont des sources laser équipées de moyens de focalisation pour former un faisceau optique concentré dans leur œuf respectif. A titre purement illustratif, il peut s'agir de diodes lasers (LED) émettant dans l'infrarouge.

De préférence, à partir du traitement de la lumière ainsi détectée, on détermine la ou les alvéoles du contenant dans lesquelles un œuf est à transférer par exemple parce qu'il est non viable ou présente des défauts.

Cette installation de traitement peut également comporter un module de communication pour adresser des données ou informations obtenues par traitement des signaux optiques d'un contenant donné à l'unité de commande de l'appareil pour transférer des objets afin de déterminer les œufs à prélever dans ce contenant et à transférer vers le second convoyeur pour leur évacuation. Le dispositif de mirage est placé en amont du dispositif pour transférer des objets sur la ligne de traitement, cette position étant repérée par rapport au sens de déplacement des contenants sur le convoyeur.

### Brève description des dessins

D'autres avantages, buts et caractéristiques particulières de la présente invention ressortiront de la description qui va suivre, faite, dans un but explicatif et nullement limitatif, en regard des dessins annexés, dans lesquels :
**Fig. 1**

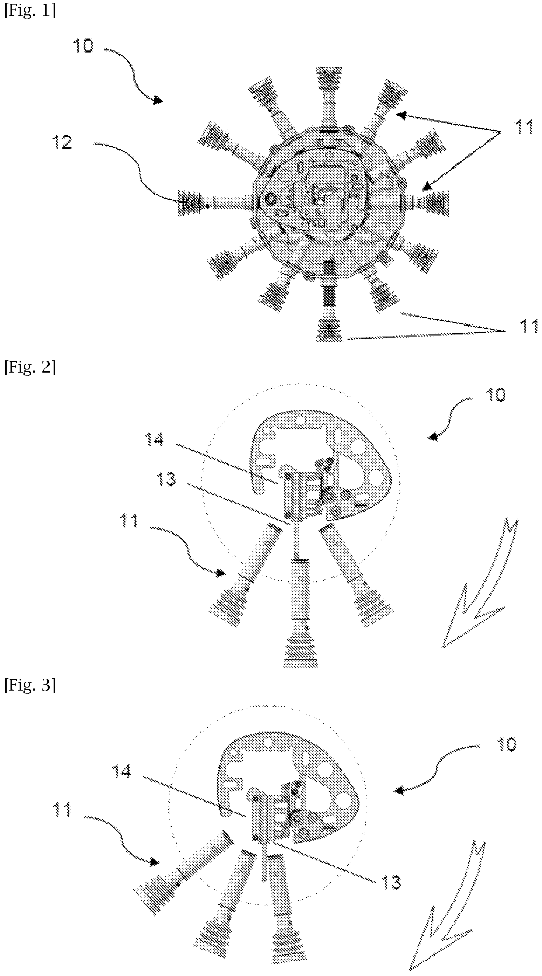

   [Fig. 1] est une vue en coupe d'un appareil de transfert d'objets selon un mode de réalisation particulier de la présente invention ;
**Fig. 2**
   [Fig. 2] est une représentation schématique partielle de l'appareil de transfert d'objets de la Fig. 1, un élément de saisie individuelle étant en position pour saisir un œuf en défilement sous l'appareil, la tige d'actionnement de l'actionneur linéaire étant dans sa position déployée ;
**Fig. 3**
   [Fig. 3] est une représentation schématique partielle de l'appareil de transfert d'objets de la Fig. 1, les éléments de saisie individuelle étant dans leur position de repos, la tige d'actionnement de l'actionneur linéaire étant dans une position intermédiaire entre ses positions déployée et repliée, un élément de saisie individuelle entraîné par le rouleau d'enlèvement tournant venant en contact avec cette tige d'actionnement ;
**Fig. 4**

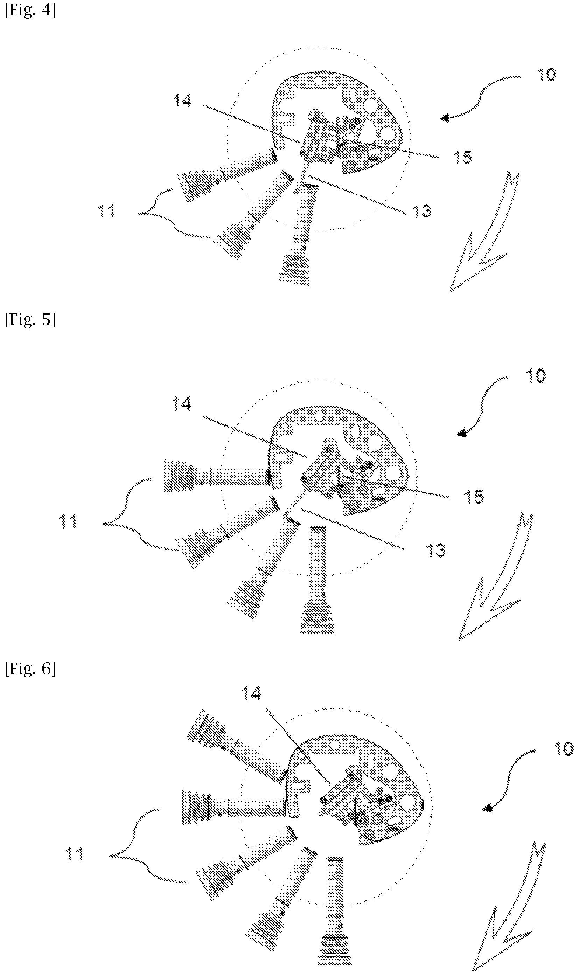

   [Fig. 4] est une représentation schématique partielle de l'appareil de transfert d'objets de la Fig. 1, les éléments de saisie individuelle étant dans leur position de repos, la tige d'actionnement de l'actionneur linéaire étant dans une position intermédiaire entre ses positions déployée et repliée, l'actionneur linéaire passant de sa position d'engagement à sa position de dégagement en étant librement entraîné par un élément de saisie individuelle ;
**Fig. 5**
   [Fig. 5] est une représentation schématique partielle de l'appareil de transfert d'objets de la Fig. 1, les éléments de saisie individuelle étant dans leur position de repos, la tige d'actionnement de l'actionneur linéaire étant dans une position intermédiaire entre ses positions déployée et repliée, l'actionneur linéaire passant de sa position d'engagement à sa position de dégagement en étant librement entraîné par un élément de saisie individuelle ;
**Fig. 6**
   [Fig. 6] est une représentation schématique partielle de l'appareil de transfert d'objets de la Fig. 1, les éléments de saisie individuelle étant dans leur position de repos, l'actionneur linéaire étant dans sa position de dégagement, la tige d'actionnement de l'actionneur linéaire étant dans sa position repliée ;
**Fig. 7**

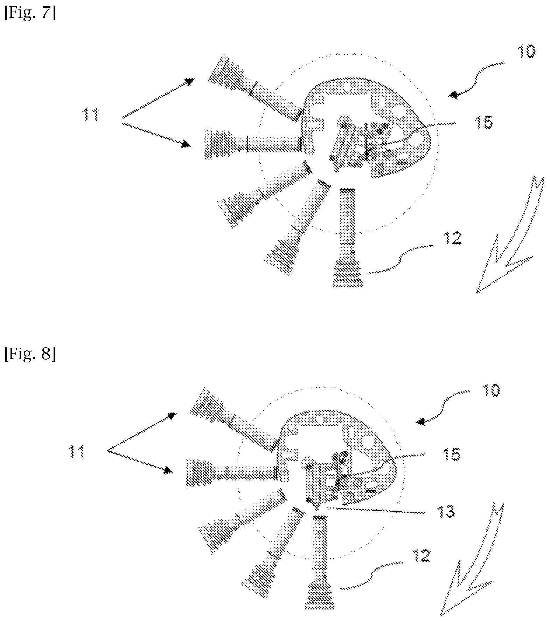

   [Fig. 7] est une représentation schématique partielle de l'appareil de transfert d'objets de la Fig. 1, les éléments de saisie individuelle étant dans leur position de repos, la tige d'actionnement de l'actionneur linéaire étant dans sa position repliée, ledit actionneur linéaire passant de sa position de dégagement à sa position d'engagement sous l'effet d'un ressort de torsion ;
**Fig. 8**
   [Fig. 8] est une représentation schématique partielle de l'appareil de transfert d'objets de la Fig. 1, les éléments de saisie individuelle étant dans leur position de repos, la tige d'actionnement de l'actionneur linéaire étant dans position repliée, l'actionneur linéaire étant dans sa position d'engagement prêt à déplacer un élément de saisie individuelle pour saisir un œuf ;

### Description des modes de réalisation

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Tout d'abord, on note que les figures ne sont pas à l'échelle.

Les Figures 1 à 8 illustrent de manière schématique et partielle un appareil pour transférer des œufs selon un mode de réalisation particulier de la présente invention.

Ces œufs sont placés dans des contenants transportés par un convoyeur rectiligne (non représenté) suivant un chemin de convoyage définissant un axe de déplacement de ces contenants.

Ce convoyeur rectiligne qui est de type à bande sans fin, comporte une unité de commande (non représentée) contrôlant la vitesse de transport des contenants.

Cet appareil pour transférer des objets est ici mis en œuvre pour prélever sélectivement de ces contenants en défilement des œufs identifiés comme étant non conformes, par exemple lors d'une étape préalable de mirage.

Ces œufs non conformes sont transportés par l'appareil et transférés vers le tapis d'un autre convoyeur pour être évacués. Ils sont par exemple déposés dans des contenants sur ce tapis d'évacuation.

Cet appareil comporte un rouleau d'enlèvement 10 entrainé en rotation et présentant sur sa surface externe des éléments de saisie individuelle 11 régulièrement espacés. Ces éléments de saisie individuelle 11 sont donc répartis sous forme d'une couronne.

Plus précisément, la surface extérieure de ce rouleau d'enlèvement 10 comporte des orifices dans chacun desquels est reçu une extrémité libre d'un élément de saisie individuelle 11 à savoir son piston, cet élément de saisie individuelle 11 étant mobile en translation dans son orifice correspondant. Le piston de chaque élément de saisie individuelle 11 porte une ventouse 12 pour la préhension d'un œuf.

Sur un segment, ou portion, de trajet circulaire parcouru par ces éléments de saisie individuelle 11 lors de la rotation du rouleau d'enlèvement 10, ces ventouses 12 sont mises en dépression par rapport à l'air environnant de sorte qu'elles sont plaquées contre la surface externe du rouleau d'enlèvement 10. Elles sont alors dans leur position dite de repos.

Cette mise en dépression est obtenue par pompage d'un volume intérieur du rouleau d'enlèvement 10, appelé encore chambre de mise en dépression, ce volume intérieur communiquant avec les orifices du rouleau d'enlèvement 10 en déplacement dans ce segment de trajet circulaire. Pour cela, l'appareil comporte une unité de pompage (non représentée).

Cet appareil comporte un actionneur linéaire 13 qui est ici un vérin pneumatique, lequel placé à l'intérieur du rouleau d'enlèvement 10, pour activer sélectivement et individuellement les éléments de saisie individuelle 11.

Pour cela, lorsqu'un élément de saisie individuelle 11 à activer se présente face à cet actionneur linéaire 13 lors de la rotation du rouleau d'enlèvement 10, la tige d'actionnement de cet actionneur linéaire 13 est déplacée de sa position repliée à sa position déployée pour venir en contact avec l'extrémité du piston de cet élément de saisie individuelle 11 afin de déplacer ce dernier entre sa position de repos et une position de préhension dans laquelle ce dernier s'étend radialement en faisant saillie à l'extérieur du rouleau d'enlèvement pour saisir un œuf.

Cet actionneur linéaire 13 est monté fixe sur un support 14 mobile en rotation de sorte que l'extrémité libre de cet actionneur linéaire 13 étant dans sa position déployée ou dans une position intermédiaire entre sa position déployée et sa position repliée, il est librement déplacé entre une position d'engagement vers une position de dégagement lorsqu'il entre en contact avec un autre élément de saisie individuelle 11, dans sa position de repos, amené par ledit rouleau d'enlèvement 10 en rotation.

Dans cette position de dégagement, cet actionneur est espacé des éléments de saisie individuelle 11 et ne risque pas d'être endommagé.

L'appareil comprend également un élément de rappel 15 pour ramener cet actionneur de sa position de dégagement à sa position d'engagement lorsque sa tige d'actionnement est dans sa position repliée de sorte que l'actionneur linéaire 13 est prêt pour activer de nouveau un élément de saisie individuelle 11.

A titre purement illustratif, cet élément de rappel 15 est ici un ressort de torsion.

Ce dispositif de protection de l'actionneur linéaire 13 permet avantageusement d'atteindre des vitesses de rotation du rouleau d'enlèvement 10 supérieures à 30 tours/min.

## Revendications

1. Appareil pour transférer des objets comprenant :
- un rouleau d'enlèvement (10) d'objets comprenant sur sa périphérie des éléments de saisie individuelle (11) desdits objets,
- un dispositif pour entrainer en rotation ledit rouleau d'enlèvement (10) d'objets,
- lesdits éléments de saisie individuelle étant disposés en au moins une couronne, ledit appareil comportant pour chaque couronne, un actionneur linéaire (13), placé dans le volume intérieur délimité par ledit rouleau, pour déplacer un élément de saisie individuelle (11) se présentant face à cet actionneur linéaire (13) entre une position de repos et une position de préhension dans laquelle cet élément de saisie individuelle (11) s'étend radialement en faisant saillie de ce rouleau d'enlèvement (10) pour saisir un objet, la position de préhension étant obtenue par appui d'une extrémité libre mobile dudit actionneur linéaire (13) sur ledit élément de saisie individuelle (11), ledit rouleau d'enlèvement (10) étant configuré pour faire défiler un à un devant chaque actionneur linéaire (13) lors de sa rotation un élément de saisie individuelle (11) dans sa position de repos, et dans lequel
- l'extrémité libre dudit actionneur linéaire (13) étant mobile entre une position repliée et une position déployée dans laquelle cette extrémité libre est en contact avec un élément de saisie individuelle (11), et **caractérisé en ce que** cet actionneur linéaire (13) est mobile en rotation entre au moins une position d'engagement et une position de dégagement de sorte que l'extrémité libre dudit actionneur linéaire (13) étant dans sa position déployée ou dans une position intermédiaire entre sa position déployée et sa position repliée, ledit actionneur linéaire (13) est librement déplacé de sa position d'engagement à sa position de dégagement lorsqu'il entre en contact avec un autre élément de saisie individuelle (11), dans sa position de repos, amené par ledit rouleau d'enlèvement (10) en rotation,
- ladite position de dégagement correspondant à une position dans laquelle ledit actionneur est espacé desdits éléments de saisie individuelle, ledit ensemble comprenant un élément de rappel (15) pour ramener ledit actionneur de sa position de dégagement à sa position d'engagement lorsque l'extrémité libre dudit actionneur est dans sa position repliée ou dans une position intermédiaire non susceptible d'interagir avec un élément de saisie individuelle (11) dans sa position de repos.

2. Appareil pour transférer des objets selon la revendication 1, **caractérisé en ce que** ledit élément de rappel (15) pour ramener ledit actionneur linéaire (13) de sa position de dégagement à sa position d'engagement est un élément ressort ou un dispositif d'attraction magnétique.

3. Appareil pour transférer des objets selon la revendication 2, **caractérisé en ce que** ledit élément ressort est un ressort de torsion.

4. Appareil pour transférer des objets selon l'une quelconque des revendications 1 à 3, **caractérisé en ce qu'**il comprend un moyen pour détecter la position de l'extrémité libre dudit actionneur linéaire (13), lequel est relié audit élément de rappel (15) pour commander son déclenchement.

5. Appareil pour transférer des objets selon l'une quelconque des revendications précédentes, **caractérisé en ce que** ledit actionneur linéaire (13) est monté fixe sur un support mobile en rotation, ledit support étant configuré pour déplacer ledit actionneur linéaire (13) entre ladite position d'engagement et ladite position de dégagement lors de sa rotation.

6. Appareil pour transférer des objets selon l'une quelconque des revendications précédentes, **caractérisé en ce que** chacun de ces éléments de saisie individuelle comporte un piston pourvu à son extrémité libre d'une ventouse (12).

7. Appareil pour transférer des objets selon la revendication 6, **caractérisé en ce que** le piston de chaque élément de saisie individuelle (11) est creux et débouche sur un orifice de la ventouse (12) pour créer une tête d'aspiration.

8. Appareil pour transférer des objets selon la revendication 6 ou 7, **caractérisé en ce que** le piston de chaque élément de saisie individuelle (11) étant reçu dans un orifice dudit rouleau d'enlèvement (10), ledit appareil comprend une unité de pompage pour mettre en dépression une partie du volume intérieur dudit rouleau et plaquer les ventouses (12) des éléments de saisie individuelle contre la surface externe dudit rouleau lorsque ces éléments de saisie individuelle sont déplacés en rotation par ledit rouleau sur un segment de trajet circulaire correspondant à ladite partie de volume intérieur ainsi mise en dépression.

9. Appareil pour transférer des objets selon l'une quelconque des revendications précédentes, **caractérisé en ce que** ledit dispositif pour entrainer en rotation ce rouleau d'enlèvement (10) d'objets est configuré de sorte que la vitesse de rotation du rouleau d'enlèvement (10) d'objets est supérieure ou égale à 20 tours/min et encore mieux à 30 tours/min.

10. Appareil pour transférer des objets selon l'une quelconque des revendications précédentes, **caractérisé en ce que** ledit actionneur linéaire (13) est un actionneur électromécanique, un actionneur pneumatique ou encore un actionneur hydraulique.

11. Appareil pour transférer des objets selon la revendication 8, **caractérisé en ce qu'**il comporte des moyens pour interrompre le vide sur un autre segment de trajet circulaire des éléments de saisie individuelle afin de libérer les objets ainsi saisis en au moins un point de dépôt prédéterminé.

12. Appareil pour transférer des objets selon l'une quelconque des revendications précédentes, **caractérisé en ce qu'**il comporte un dispositif de nettoyage placé à l'intérieur dudit rouleau pour éjecter de l'eau sous pression dans ledit rouleau lorsque ce dispositif de nettoyage est connecté à une source d'alimentation en eau sous pression.

13. Appareil pour transférer des objets selon l'une quelconque des revendications précédentes, **caractérisé en ce qu'**il comporte dans sa partie inférieure un bac de récupération d'eaux usées.

14. Installation de traitement d'œufs comportant un appareil de transfert d'objets selon l'une quelconque des revendications 1 à 13, un premier convoyeur pour faire défiler des œufs au droit dudit appareil de transfert et un second convoyeur pour évacuer les œufs saisis depuis le premier convoyeur par ledit appareil de transfert d'œufs.

15. Installation de traitement d'œufs selon la revendication 14, **caractérisée en ce que** premier convoyeur comportant n voies de transport d'œufs avec n supérieur ou égal à 2, le rouleau d'enlèvement (10) comporte n couronnes d'éléments de saisie individuelle, et par conséquent, l'appareil de transfert comprend n actionneurs linéaires (13).

## Patentansprüche

1. Vorrichtung zum Überführen von Objekten, umfassend:
- eine Objektentnahmerolle (10), umfassend an ihrem Umfang Elemente (11) zum einzelnen Erfassen der Objekte,
- eine Vorrichtung zum drehenden Antreiben der Objektentfernungsrolle (10),
- wobei die Einzelerfassungselemente in mindestens einem Kranz angeordnet sind, wobei die Vorrichtung für jeden Kranz einen Linearsteller (13), der in dem Innenvolumen platziert ist, das durch die Rolle begrenzt wird, zum Verschieben eines Einzelerfassungselements (11) aufweist, das diesem Linearsteller (13) zugewandt vorliegt, zwischen einer Ruheposition und einer Greifposition, in der sich dieses Einzelerfassungselement (11) von dieser Entnahmerolle (10) zum Erfassen eines Objekts radial abstehend erstreckt, wobei die Greifposition durch Anliegen eines bewegbaren freien Endes des Linearstellers (13) an dem Einzelerfassungselement (11) erhalten wird, wobei die Entnahmerolle (10) zum Vorbeifahrenlassen eines Einzelerfassungselements (11) nach dem anderen in seiner Ruhestellung an jedem Linearsteller (13) bei ihrer Drehung konfiguriert ist, und wobei
- das freie Ende des Linearstellers (13) zwischen einer eingeklappten Position und einer ausgefahrenen Position bewegbar ist, in der dieses freie Ende ein Einzelerfassungselement (11) berührt, und **dadurch gekennzeichnet, dass** dieser Linearsteller (13) zwischen mindestens einer Eingriffsposition und einer Freigabeposition so drehend bewegbar ist, dass das freie Ende des Linearstellers (13) in seiner ausgefahrenen Position oder in einer Zwischenposition zwischen seiner ausgefahrenen Position und seiner eingeklappten Position ist, wobei sich der Linearsteller (13) von seiner Eingriffsposition in seine Freigabeposition frei verschoben wird, wenn er ein anderes Einzelerfassungselement (11) in seiner Ruheposition berührt, das durch die Entnahmerolle (10) in Drehung versetzt wird,
- wobei die Freigabeposition einer Position entspricht, in der der Steller von den Einzelerfassungselementen beabstandet ist, die Baugruppe umfassend ein Rückstellelement (15) zum Zurückbringen des Stellers aus seiner Freigabeposition in seine Eingriffsposition, wenn das freie Ende des Stellers in seiner eingeklappten Position oder in einer Zwischenposition ist, die nicht in der Lage ist, mit einem Einzelerfassungselement (11) in seiner Ruheposition zusammenzuwirken.

2. Vorrichtung zum Überführen von Objekten nach Anspruch 1, **dadurch gekennzeichnet, dass** das Rückstellelement (15) zum Zurückführen des Linearstellers (13) von seiner Freigabeposition in seine Eingriffsposition ein Federelement oder eine Magnetanziehungseinrichtung ist.

3. Vorrichtung zum Überführen von Objekten nach Anspruch 2, **dadurch gekennzeichnet, dass** das Federelement eine Torsionsfeder ist.

4. Vorrichtung zum Überführen von Objekten nach einem der Ansprüche 1 bis 3, **dadurch gekennzeichnet, dass** es Mittel zum Erkennen der Position des freien Endes des Linearstellers (13), der mit dem Rückstellelement (15) verbunden ist, zum Steuern seiner Auslösung umfasst.

5. Vorrichtung zum Überführen von Objekten nach einem der vorstehenden Ansprüche, **dadurch gekennzeichnet, dass** der Linearsteller (13) auf einem drehbaren bewegbaren Träger fest montiert ist, wobei der Träger zum Verschieben des Linearstellers (13) während seiner Drehung zwischen der Eingriffsposition und der Freigabeposition konfiguriert ist.

6. Vorrichtung zum Überführen von Objekten nach einem der vorstehenden Ansprüche, **dadurch gekennzeichnet, dass** jedes dieser Einzelerfassungselemente einen Kolben aufweist, der an seinem freien Ende mit einem Saugnapf (12) versehen ist.

7. Vorrichtung zum Überführen von Objekten nach Anspruch 6, **dadurch gekennzeichnet, dass** der Kolben jedes Einzelerfassungselements (11) hohl ist und zum Erzeugen eines Saugnapfs in eine Öffnung des Saugnapfs (12) mündet.

8. Vorrichtung zum Überführen von Objekten nach Anspruch 6 oder 7, **dadurch gekennzeichnet, dass** der Kolben jedes Einzelerfassungselements (11) in einer Öffnung der Entnahmerolle (10) aufgenommen wird, wobei die Vorrichtung eine Pumpeinheit zum Beaufschlagen eines Teils des Innenvolumens der Rolle mit Unterdruck und zum Drücken der Saugnäpfe (12) der Einzelerfassungselemente gegen die Außenoberfläche der Rolle umfasst, wenn diese Einzelerfassungselemente durch die Rolle auf einem kreisförmigen Streckensegment drehend verschoben werden, das dem mit Unterdruck beaufschlagten Teil des Innenvolumens entspricht.

9. Vorrichtung zum Überführen von Objekten nach einem der vorstehenden Ansprüche, **dadurch gekennzeichnet, dass** die Vorrichtung zum drehenden Antreiben dieser Objektentfernungsrolle (10) so konfiguriert ist, dass die Drehgeschwindigkeit der Objektentfernungsrolle (10) größer als oder gleich 20 Umdrehungen/min und besser noch 30 U/min ist.

10. Vorrichtung zum Überführen von Objekten nach einem der vorstehenden Ansprüche, **dadurch gekennzeichnet, dass** der Linearsteller (13) ein elektromechanischer Steller, ein pneumatischer Steller oder auch ein hydraulischer Steller ist.

11. Vorrichtung zum Überführen von Objekten nach Anspruch 8, **dadurch gekennzeichnet, dass** es Mittel zum Unterbrechen des Vakuums auf einem anderen kreisförmigen Streckensegment der Einzelerfassungselemente umfasst, um die so erfassten Objekte an mindestens einer vorbestimmten Ablagestelle zu befreien.

12. Vorrichtung zum Überführen von Objekten nach einem der vorstehenden Ansprüche, **dadurch gekennzeichnet, dass** sie eine Reinigungseinrichtung, die im Inneren der Rolle platziert ist, zum Ausstoßen von unter Druck stehendem Wasser in die Rolle aufweist, wenn diese Reinigungseinrichtung an eine Versorgungsquelle für unter Druck stehendes Wasser angeschlossen ist.

13. Vorrichtung zum Überführen von Objekten nach einem der vorstehenden Ansprüche, **dadurch gekennzeichnet, dass** sie in dem unteren Teil einen Abwasserrückgewinnungstank aufweist.

14. Eierverarbeitungsanlage, die eine Objektüberführungsvorrichtung nach einem der Ansprüche 1 bis 13, einen ersten Förderer zum Vorbeifahrenlassen von Eiern in Einklang mit der Überführungsvorrichtung und einen zweiten Förderer zum Entfernen der erfassten Eier von dem ersten Förderer durch die Eierüberführungsvorrichtung aufweist.

15. Eierverarbeitungsanlage nach Anspruch 14, **dadurch gekennzeichnet, dass** der erster Förderer n Eiertransportwege aufweist, wobei n größer als oder gleich 2 ist, die Entnahmerolle (10) n Kränze von Einzelerfassungselementen aufweist und demnach die Überführungsvorrichtung n Linearsteller (13) aufweist.

## Claims

1. Apparatus for transferring objects comprising:
- an object take-off roller (10) comprising, on its periphery, members (11) for individually gripping said objects,
- a device for rotating said object take-off roller (10), - said individual gripping members being arranged in at least one ring, said apparatus comprising, for each ring, a linear actuator (13), placed in the interior volume defined by said roller, for moving an individual gripping member (11) appearing opposite this linear actuator (13) between a rest position and a gripping position in which this individual gripping member (11) extends radially, projecting from this take-off roller (10) to grip an object, the gripping position being obtained by one free mobile end of said linear actuator (13) bearing against said individual gripping member (11), said take-off roller (10) being configured to move an individual gripping member (11) in its rest position one by one in front of each linear actuator (13) as it rotates, and wherein
- the free end of said linear actuator (13) is movable between a folded position and a deployed position in which this free end is in contact with an individual gripping member (11), and **characterized in that** this linear actuator (13) is rotatably movable
between at least an engaged position and a disengaged position such that the free end of said linear actuator (13), being in its deployed position or in an intermediate position between its deployed position and its folded position, said linear actuator (13) is freely moved from its engaged position to its disengaged position when it comes into contact with another individual gripping member (11), in its rest position, carried by said rotating take-off roller (10), - said disengaged position corresponding to a position in which said actuator is spaced apart from said individual gripping members, said assembly comprising a return member (15) to return said actuator from its disengaged position to its engaged position when the free end of said actuator is in its folded position or in an intermediate position not able to interact with an individual gripping member (11) in its rest position.

2. Apparatus for transferring objects according to claim 1, **characterized in that** said return member (15) for returning said linear actuator (13) from its disengaged position to its engaged position is a spring member or a magnetic attraction device.

3. Apparatus for transferring objects according to claim 2, **characterized in that** said spring member is a torsion spring.

4. Apparatus for transferring objects according to any one of claims 1 to 3, **characterized in that** it comprises means for detecting the position of the free end of said linear actuator (13), which is connected to said return member (15) in order to control the triggering thereof.

5. Apparatus for transferring objects according to any one of the preceding claims, **characterized in that** said linear actuator (13) is fixedly mounted on a rotatable support, said support being configured to move said linear actuator (13) between said engaged position and said disengaged position during its rotation.

6. Apparatus for transferring objects according to any one of the preceding claims, **characterized in that** each of these individual gripping members comprises a piston provided with a suction cup (12) at its free end.

7. Apparatus for transferring objects according to claim 6, **characterized in that** the piston of each individual gripping member (11) is hollow and opens onto an orifice of the suction cup (12) to create a suction head.

8. Apparatus for transferring objects according to claim 6 or 7, **characterized in that** the piston of each individual gripping member (11) being received in an orifice of said take-off roller (10), said apparatus comprises a pumping unit for placing a part of the interior volume of said roller under vacuum and pressing the suction cups (12) from the individual gripping members against the outer surface of said roller when these individual gripping members are rotated by said roller on a circular path segment corresponding to said part of the interior volume thus placed under vacuum.

9. Apparatus for transferring objects according to any one of the preceding claims, **characterized in that** said device for rotating this object take-off roller (10) is configured such that the speed of rotation of the object take-off roller (10) is greater than or equal to 20 revolutions/min and better still to 30 revolutions/min.

10. Apparatus for transferring objects according to any one of the preceding claims, **characterized in that** said linear actuator (13) is an electromechanical actuator, a pneumatic actuator or a hydraulic actuator.

11. Apparatus for transferring objects according to claim 8, **characterized in that** it comprises means for interrupting the vacuum on another circular path segment of the individual gripping members in order to release the objects thus gripped at at least one predetermined deposition point.

12. Apparatus for transferring objects according to any one of the preceding claims, **characterized in that** it comprises a cleaning device placed inside said roller for jetting pressurized water into said roller when this cleaning device is connected to a pressurized water supply source.

13. Apparatus for transferring objects according to any one of the preceding claims, **characterized in that** it comprises in its lower part a wastewater recovery tank.

14. Egg processing facility comprising an apparatus for transferring objects according to any one of claims 1 to 13, a first conveyor for moving eggs in line with said transfer apparatus and a second conveyor to remove the eggs gripped from the first conveyor by said egg transfer apparatus.

15. Egg processing facility according to claim 14, **characterized in that** the first conveyor comprising n egg transport paths with n being greater than or equal to 2, the take-off roller (10) comprises n rings of individual gripping members, and consequently, the transfer apparatus comprises n linear actuators (13).
